# EUROPÄISCHE PATENTSCHRIFT

(11) **EP 4 218 410 B1**
(45) Veröffentlichungstag und Bekanntmachung des Hinweises auf die Patenterteilung: **14.08.2024**
(21) Anmeldenummer: 23158658.7
(22) Anmeldetag: 18.10.2019
(51) Int. Cl.: A01M 21/04

(54) **VERFAHREN ZUM AUSBRINGEN VON FLÜSSIGKEIT**
METHOD FOR THE APPLICATION OF LIQUID
PROCÉDÉ DE DISTRIBUTION DU LIQUIDE

(30) Priorität: 25.10.2018 DE 102018126588
(43) Veröffentlichungstag der Anmeldung: 02.08.2023
(62) Teilanmeldung aus: 19401042.7
(73) Patentinhaber: Amazonen-Werke H. Dreyer SE & Co. KG, 49205 Hasbergen (DE)
(72) Erfinder: AUSTERMANN, Stefan, 48291 Telgte (DE); DR. DREYER, Justus, 49078 Osnabrück (DE); HILBERT, Florenz, 48282 Emsdetten (DE); EHLEN, Volker, 49205 Hasbergen (DE); JOHANNABER, Stefan Jan, 49536 Lienen (DE); KIEFER, Stefan, 49074 Osnabrück (DE); KLEMANN, Timo, 49191 Belm (DE); HOLTKÖTTER, Christian, 33775 Versmold (DE)

(56) Entgegenhaltungen:
- EP-A1- 2 995 382
- US-A- 4 015 366
- US-A1- 2018 243 771

## Beschreibung

Die Erfindung betrifft ein Verfahren zum Ausbringen von Flüssigkeit nach dem Oberbegriff des Patentanspruchs 1 und eine landwirtschaftliche Spritzeinrichtung nach dem Oberbegriff des Patentanspruchs 10.

Ein derartiges Verfahren ist in EP 2 995 382 A1 offenbart.

Unterschiedliche landwirtschaftliche Nutzpflanze werden entlang von parallel zueinander verlaufenden Saatreihen ausgesät. Somit kommt es während der Auswuchsphase der landwirtschaftlichen Nutzpflanzen zu entsprechenden Pflanzenreihen auf der landwirtschaftlichen Nutzfläche.

Zur Bekämpfung von Schadbewuchs, welcher sich zwischen den landwirtschaftlichen Nutzpflanzen während der Aufwuchsphase ausbildet, sind bereits Erfassungssysteme bekannt, welche einzelne Wildpflanzen auf einer landwirtschaftlichen Nutzfläche erfassen können. Dies erlaubt das lokale Ausbringen entsprechender Pflanzenschutzmittel auf die erfassten Wildpflanzen.

Die Erfassung einzelner Wildpflanzen auf einer landwirtschaftlichen Nutzfläche ist jedoch vergleichsweise aufwendig, sodass landwirtschaftliche Spritzeinrichtungen mit kostenintensiven Sensor- oder Kamerasystemen auszustatten sind. In einer Vielzahl von Anwendungsbereichen scheidet die Verwendung entsprechender Erfassungssysteme zur gezielten lokalen Ausbringung von Pflanzenschutzmitteln also aus.

Ferner sind im Stand der Technik Systeme bekannt, welche die Erfassung von Pflanzenreihen mit einem vergleichsweise geringen Aufwand ermöglichen. Entsprechende Systeme werden zur reihenbezogenen Ausbringung von Spritzflüssigkeit eingesetzt, erlauben jedoch bisher nicht die Bekämpfung von Schadbewuchs bzw. Wildpflanzen.

Die der Erfindung zugrundeliegende Aufgabe besteht somit darin, die Schadbewuchsbekämpfung auf Pflanzenreihen aufweisenden landwirtschaftlichen Nutzflächen zu vereinfachen.

Die Aufgabe wird gelöst durch ein Verfahren mit den Merkmalen des Anspruchs 1, wobei sich im Rahmen des erfindungsgemäßen Verfahrens die Ausbringung von Flüssigkeit entlang von Reihenbereichen, welche in Fahrtrichtung verlaufende Pflanzenreihen aufweisen, von der Ausbringung von Flüssigkeit entlang von Zwischenbereichen, welche sich zwischen zwei in Fahrtrichtung verlaufenden Pflanzenreihen befinden, unterscheidet.

Die Erfindung macht sich die Erkenntnis zunutze, dass durch unterschiedliche Ausbringungen entlang von Reihenbereichen und entlang von Zwischenbereichen der landwirtschaftlichen Nutzfläche keine aufwendige Einzelerfassung von Wildpflanzen oder Schadbewuchs notwendig ist. Die Reihenerfassung ist wesentlich kostengünstiger und einfacher umsetzbar als die Erfassung einzelner Wildpflanzen oder die Erfassung von lokalem Schadbewuchs. Trotzdem erlaubt das erfindungsgemäße Verfahren ein zielgerichtetes Ausbringen entsprechender Pflanzenschutzmittel zum Bekämpfen von Schadbewuchs, ohne dass die Ausbringung entsprechender Wirkstoffe auf den Nutzpflanzenbestand zu erfolgen hat. Somit werden die Nutzpflanzen auf der landwirtschaftlichen Nutzfläche geschont, wodurch das Wachstumspotential gesteigert wird. Im Vergleich zu einer einheitlichen Ausbringung von Pflanzenschutzmitteln über die gesamte landwirtschaftliche Nutzfläche kommt es außerdem zu einer erheblichen Einsparung von Pflanzenschutzmitteln und außerdem zu einer deutlichen Erhöhung der Wirksamkeit des Ausbringvorgangs.

Die auf die Reihenbereiche und/oder die Zwischenbereiche ausgebrachte Flüssigkeit beinhaltet vorzugsweise einen oder mehrere Wirkstoffe. Zumindest ein Wirkstoff kann ein Pflanzenschutzmittel sein, welches die Nutzpflanzen auf der landwirtschaftlichen Nutzfläche vor Schadorganismen schützt. Beispielsweise ist ein Pflanzenschutzmittel ein Insektizid. Zumindest ein Wirkstoff kann auch ein Wachstumsregulator sein. Alternativ oder zusätzlich kann zumindest ein Wirkstoff auch ein Herbizid sein.

In einer bevorzugten Ausführungsform des erfindungsgemäßen Verfahrens unterscheidet sich die Ausbringung von Flüssigkeit entlang der Reihenbereiche von der Ausbringung von Flüssigkeit entlang der Zwischenbereiche hinsichtlich der Ausbringmenge an Flüssigkeit. Somit unterscheidet sich auch die ausgebrachte Wirkstoffmenge entlang der Reihenbereiche und entlang der Zwischenbereiche. In einer Ausführungsform des erfindungsgemäßen Verfahrens kann die Ausbringmenge in den Reihenbereichen oder den Zwischenbereichen auch Null sein. In einer alternativen Ausführungsform des erfindungsgemäßen Verfahrens ist weder die Ausbringmenge in den Reihenbereichen noch die Ausbringmenge in den Zwischenbereichen gleich Null.

In einer anderen Ausführungsform des erfindungsgemäßen Verfahrens unterscheidet sich die Ausbringung von Flüssigkeit entlang der Reihenbereiche von der Ausbringung von Flüssigkeit entlang der Zwischenbereiche hinsichtlich der Ausbringmethode. In einer Ausbringmethode wird die Flüssigkeit mittels einer Düsenausbringung auf die landwirtschaftliche Nutzfläche ausgebracht. In diesem Fall sind die Ausbringelemente vorzugsweise als Spritzdüsen ausgebildet. Bei dieser Ausbringmethode kommt es zu einer Zerstäubung der Flüssigkeit, wodurch zumindest bereichsweise eine gleichmäßige Flüssigkeitsausbringung umsetzbar ist. In einer alternativen Ausbringmethode wird die Flüssigkeit mittels einer Schlauchausbringung auf die landwirtschaftliche Nutzfläche ausgebracht. Bei einer entsprechenden Schlauchausbringung können Ausbringschläuche über die landwirtschaftliche Nutzfläche gezogen werden, sodass die Ausbringung der Flüssigkeit auf der landwirtschaftlichen Nutzfläche entlang von zueinander beabstandeten und im Wesentlichen parallel zueinander verlaufenden Reihen erfolgt. Die Ausbringmethoden können sich auch hinsichtlich der Beabstandung der Ausbringelemente zur landwirtschaftlichen Nutzfläche voneinander unterscheiden. Beispielsweise erfolgt die Ausbringung von Flüssigkeit entlang der Reihenbereiche mittels Ausbringelementen, welche einen ersten Abstand von der landwirtschaftlichen Nutzfläche aufweisen und die Ausbringung der Flüssigkeit entlang der Zwischenbereiche erfolgt mittels Ausbringelementen, welche einen zweiten Abstand zu der landwirtschaftlichen Nutzfläche aufweisen, wobei sich der erste Abstand von dem zweiten Abstand unterscheidet.

Es ist außerdem ein erfindungsgemäßes Verfahren bevorzugt, bei welchem die Flüssigkeit entlang der Reihenbereiche mittels eines ersten Typs von Ausbringelementen und die Flüssigkeit entlang der Zwischenbereiche mittels eines zweiten Typs von Ausbringelementen ausgebracht wird. Die Ausbringelemente des ersten Typs können Düsen, insbesondere Flachstrahldüsen, sein, welche vorzugsweise im Bereich des Spritzgestänges angeordnet sind. Die Ausbringelemente des zweiten Typs können Düsen sein, welche im Nahbereich des Bodens angeordnet und über eine Leitung mit dem Spritzgestänge verbunden sind. Die Leitung kann ein Rohr oder ein Schlauch sein. Die im Nahbereich des Bodens angeordneten Düsen bewegen sich während der Ausbringung der Flüssigkeit auf die landwirtschaftliche Nutzfläche vorzugsweise unterhalb eines Blätterdachs der Nutzpflanzen. Die Ausbringelemente des zweiten Typs können auch Dropleg-Düsen sein. Ferner können die Ausbringelemente des ersten Typs oder des zweiten Typs auch Schleppschläuche sein, wobei die Flüssigkeitsausbringung über Schleppschläuche vorzugsweise eine Ausbringung von Flüssigdünger auf die landwirtschaftliche Nutzfläche betrifft.

Im Rahmen des erfindungsgemäßen Verfahrens wird entlang der Reihenbereiche eine erste Flüssigkeit und entlang der Zwischenbereiche eine zweite Flüssigkeit ausgebracht. Die erste Flüssigkeit unterscheidet sich dabei von der zweiten Flüssigkeit. Insbesondere unterscheiden sich die erste Flüssigkeit und die zweite Flüssigkeit hinsichtlich ihrer Bestandteile und/oder hinsichtlich ihrer Zusammensetzung. Insbesondere weisen die erste Flüssigkeit und die zweite Flüssigkeit unterschiedliche Wirkstoffe und/oder unterschiedliche Mengen an Wirkstoffen auf.

Darüber hinaus ist ein erfindungsgemäßes Verfahren bevorzugt, bei welchem die erste Flüssigkeit Pflanzenschutzmittel und/oder Wachstumsregulatoren umfasst. Alternativ oder zusätzlich umfasst die zweite Flüssigkeit zumindest ein Herbizid. Die erste Flüssigkeit und die zweite Flüssigkeit können sich auch in ihren Anteilen an Pflanzenschutzmitteln, Wachstumsregulatoren und/oder Herbiziden unterscheiden. In den Reihenbereichen und in den Zwischenbereichen können einzelne Wirkstoffe auch vollständig weggelassen werden. Herbizide hemmen das Nutzpflanzenwachstum und sind somit in den Reihenbereichen zu vermeiden oder zumindest geringer zu dosieren. In den Zwischenbereichen herrscht regelmäßig ein höherer Unkrautdruck, sodass hier eine stärkere Bekämpfung des Schadbewuchses und somit eine gesteigerte Herbizid-Anwendung notwendig ist. Durch eine geringe Menge an Herbiziden in den Reihenbereichen werden die Nutzpflanzen geschont, sodass es zu einer Steigerung des Wachstumspotentials kommt.

Bei dem erfindungsgemäßen Verfahren wird die erste Flüssigkeit mehreren oder sämtlichen Ausbringelementen über einen eigenen Flüssigkeitskreislauf zugeführtund/oder durch eine Wirkstoff-Direkteinspeisung erzeugt. In einem entsprechenden Flüssigkeitskreislauf kann die erste Flüssigkeit dauerhaft zirkulieren, sodass ein hoher Durchmischungsgrad erreicht wird. Darüber hinaus erlaubt ein entsprechender Flüssigkeitskreislauf ein vergleichsweise schnelles Ansprechverhalten der Ausbringelemente, da die in dem Flüssigkeitskreislauf zirkulierende Flüssigkeit den entsprechenden Ausbringelementen rasch bereitgestellt werden kann. Mittels einer entsprechenden Wirkstoff-Direkteinspeisung kann eine bedarfsgerechte Flüssigkeitserzeugung umgesetzt werden. Dies kann insbesondere beim Einsatz von kostenintensiven Wirkstoffen vorteilhaft sein.

In einer anderen Ausführungsform des erfindungsgemäßen Verfahrens wird die zweite Flüssigkeit mehreren oder sämtlichen Ausbringelementen über einen eigenen Flüssigkeitskreislauf zugeführt. Alternativ oder zusätzlich wird die zweite Flüssigkeit durch eine Wirkstoff-Direkteinspeisung erzeugt. Insbesondere wird die erste Flüssigkeit den Ausbringelementen über einen ersten Flüssigkeitskreislauf bereitgestellt, wobei die zweite Flüssigkeit den Ausbringelementen über einen zweiten Flüssigkeitskreislauf bereitgestellt wird. Dabei können die Ausbringelemente der landwirtschaftlichen Spritzeinrichtung entweder lediglich mit einem der Flüssigkeitskreisläufe oder mit beiden Flüssigkeitskreisläufen verbunden sein. Insbesondere kann den Ausbringelementen auch eine Mischkammer vorgeschaltet sein, sodass eine Vermischung der ersten Flüssigkeit und der zweiten Flüssigkeit innerhalb der Mischkammer erfolgen kann.

In einer besonders bevorzugten Ausführungsform des erfindungsgemäßen Verfahrens wird die Ausbringung von Flüssigkeit entlang der Reihenbereiche während des Ausbringvorgangs verändert. Alternativ oder zusätzlich wird die Ausbringung von Flüssigkeit entlang der Zwischenbereiche während des Ausbringvorgangs verändert. Die Ausbringung von Flüssigkeit entlang der Zwischenbereiche kann beispielsweise erfolgen, wenn lokal stark ausgeprägter Schadbewuchs auf der landwirtschaftlichen Nutzfläche innerhalb eines Zwischenbereichs erfasst wird. In diesem Fall ist eine zusätzliche Erfassungseinrichtung notwendig, welche die Erfassung von Wildpflanzen und/oder Schadbewuchs auf der landwirtschaftlichen Nutzfläche ermöglicht. Die Ausbringung von Flüssigkeit entlang der Reihenbereiche kann beispielsweise verändert werden, wenn ein lokal beeinträchtigter Pflanzenzustand entlang der Reihenbereiche erfasst wird. Dies kann beispielsweise über ein Erfassen der Pflanzenhöhe bzw. Wachstumshöhe der Nutzpflanzen erfolgen. Alternativ oder zusätzlich kann eine Farbauswertung entlang der Reihenbereiche erfolgen, sodass aufgrund des Farbzustands der Nutzpflanzen eine lokale Beeinträchtigung des Pflanzenbestands erfasst werden kann.

Alternativ kann die Ausbringung von Flüssigkeit entlang der Reihenbereiche und/oder die Ausbringung von Flüssigkeit entlang der Zwischenbereiche auch vor dem Ausbringvorgang festgelegt werden, sodass während des Ausbringvorgangs keine Veränderung der Flüssigkeitsausbringung entlang der Reihenbereiche und/oder entlang der Zwischenbereiche erfolgt.

Darüber hinaus ist ein erfindungsgemäßes Verfahren bevorzugt, bei welchem die Position und/oder die Neigung von einzelnen oder sämtlichen Ausbringelementen in Bezug auf das Spritzgestänge während des Ausbringens der Flüssigkeit verändert wird. Beispielsweise können einzelne oder sämtliche Ausbringelemente der landwirtschaftlichen Spritzeinrichtung aktiv und/oder unabhängig voneinander angesteuert werden. Das Positionieren von Ausbringelementen erfolgt vorzugsweise durch eine Bewegung der Ausbringelemente quer zur Fahrtrichtung. Das Bewegen der Ausbringelemente erfolgt vorzugsweise mittels elektrischer, pneumatischer oder hydraulischer Aktoren. Eine oder mehrere Ausbringelemente können oberhalb von Pflanzenreihen positioniert und/oder auf Pflanzenreihen ausgerichtet werden. Eine oder mehrere Ausbringelemente können oberhalb von Zwischenbereichen positioniert und/oder auf Zwischenbereiche ausgerichtet werden.

Das erfindungsgemäße Verfahren wird ferner dadurch vorteilhaft weitergebildet, dass das Erfassen von Pflanzenreihen auf der landwirtschaftlichen Nutzfläche mittels eines oder mehrerer Sensoren und/oder mittels einer oder mehrerer Kameras der landwirtschaftlichen Spritzeinrichtung erfolgt. Insbesondere ist der eine oder sind die mehreren Sensoren und/oder ist die eine oder sind die mehreren Kameras an dem Spritzgestänge der landwirtschaftlichen Spritzeinrichtung angeordnet und/oder befestigt. Vorzugsweise ist der eine oder sind die mehreren Sensoren und/oder ist die eine oder sind die mehreren Kameras mit einer Steuerungseinrichtung verbunden, welche die Sensorsignale oder die Kamerasignale auswertet. Vorzugsweise erfolgt das Ausbringen der Flüssigkeit auf die landwirtschaftliche Nutzfläche mittels der Ausbringelemente in Abhängigkeit der durch die Steuerungseinrichtung ausgewerteten Sensorsignale oder Kamerasignale.

Die der Erfindung zugrundeliegende Aufgabe wird ferner durch eine landwirtschaftliche Spritzeinrichtung der eingangs genannten Art gelöst, wobei die erfindungsgemäße Spritzeinrichtung dazu eingerichtet ist, entlang von Reihenbereichen, welche in Fahrtrichtung verlaufenden Pflanzenreihen aufweisen, und entlang von Zwischenbereichen, welche sich zwischen zwei in Fahrtrichtung verlaufenden Pflanzenreihen befinden, sich voneinander unterscheidende Flüssigkeitsausbringungen umzusetzen.

In einer bevorzugten Ausführungsform der erfindungsgemäßen landwirtschaftlichen Spritzeinrichtung weist diese eine Steuerungseinrichtung auf, welche dazu eingerichtet ist, die landwirtschaftliche Spritzeinrichtung dazu zu veranlassen, entlang der Reihenbereiche und entlang der Zwischenbereiche unterschiedliche Ausbringmengen an Flüssigkeit und/oder unterschiedliche Flüssigkeiten auszubringen. Die Steuerungseinrichtung ist vorzugsweise signalleitend mit der Erfassungseinrichtung verbunden. Die Erfassungseinrichtung kann eine oder mehrere Sensoren und/oder eine oder mehrere Kameras umfassen.

In einer anderen Ausführungsform der erfindungsgemäßen landwirtschaftlichen Spritzeinrichtung weist diese Ausbringelemente eines ersten Typs und Ausbringelemente eines zweiten Typs auf, wobei die Ausbringelemente derart angeordnet und/oder ausgerichtet sind, dass Flüssigkeit entlang der Reihenbereiche mittels der Ausbringelemente des ersten Typs und Flüssigkeit entlang der Zwischenbereiche mittels der Ausbringelemente des zweiten Typs ausbringbar ist. Hierdurch kann die Flüssigkeit entlang der Reihenbereiche und entlang der Zwischenbereiche mit unterschiedlichen Ausbringmethoden ausgebracht werden.

In einer weiteren Ausführungsform der erfindungsgemäßen landwirtschaftlichen Spritzeinrichtung ist diese dazu eingerichtet, dass Verfahren zum Ausbringen von Flüssigkeit nach einer der vorstehend beschriebenen Ausführungsformen auszuführen. Hinsichtlich der Vorteile und Modifikationen einer derartigen landwirtschaftlichen Spritzeinrichtung wird auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: einen Abschnitt eines Spritzgestänges einer erfindungsgemäßen landwirtschaftlichen Spritzeinrichtung in einer schematischen Darstellung; und
- Fig. 2: Teile einer erfindungsgemäßen landwirtschaftlichen Spritzeinrichtung in einer schematischen Darstellung.

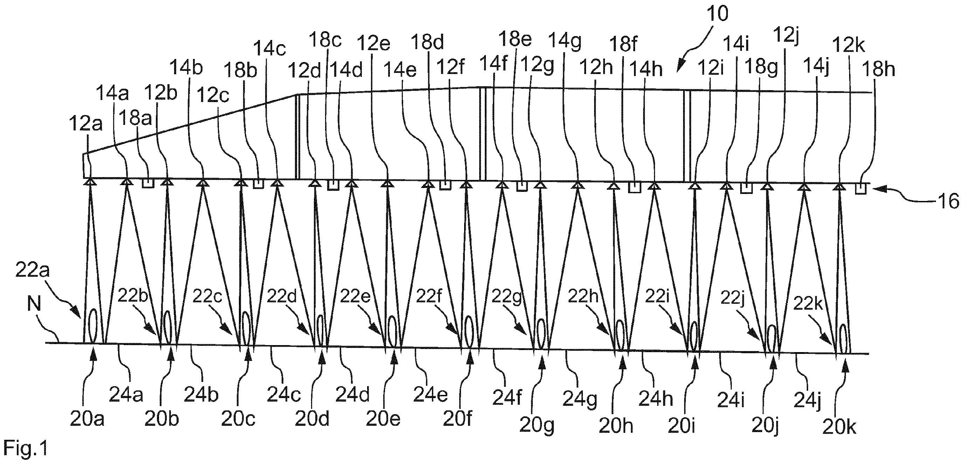

Die Fig. 1 zeigt ein Spritzgestänge 10 einer als Feldspritze ausgebildeten landwirtschaftlichen Spritzeinrichtung. Der dargestellte Abschnitt des Spritzgestänges 10 ist ein seitlicher Ausleger, welche sich quer zur Fahrtrichtung der landwirtschaftlichen Spritzeinrichtung erstreckt. Das Spritzgestänge 10 weist einen weiteren sich in die entgegengesetzte Richtung erstreckenden Ausleger auf.

Das Spritzgestänge 10 umfasst mehrere Gestängesegmente, welche zueinander klappbar ausgebildet sind. An dem Spritzgestänge 10 sind mehrere Kameras 18a-18h einer Erfassungseinrichtung 16 angeordnet. Die Erfassungseinrichtung 16 dient zum Erfassung von Pflanzenreihen 20a-20k auf der landwirtschaftlichen Nutzfläche N. Ferner sind an dem Spritzgestänge 10 mehrere als Spritzdüsen ausgebildete Ausbringelemente 12a-12k, 14a-14j angeordnet, mittels welchen Flüssigkeit auf die landwirtschaftliche Nutzfläche N ausbringbar ist. Mittels der Ausbringelemente 12a-12k ist Flüssigkeit entlang von Reihenbereichen 22a-22k ausbringbar, wobei die Reihenbereiche 22a-22k die in Fahrtrichtung verlaufenden Pflanzenreihen 20a-20k umfassen. Mittels der Ausbringelemente 14a-14j ist Flüssigkeit entlang von Zwischenbereichen 24a-24j ausbringbar, wobei sich die Zwischenbereiche 24a-24j jeweils zwischen zwei in Fahrtrichtung verlaufenden Pflanzenreihen 20a-20k befinden.

Da die Ausbringelemente 12a-12k und die Ausbringelemente 14a-14j sich voneinander unterscheiden, wird die Flüssigkeit in den Reihenbereichen 22a-22k in anderer Weise ausgebracht als in den Zwischenbereichen 24a-24j. Damit dies umgesetzt wird, umfasst die landwirtschaftliche Spritzeinrichtung eine Steuerungseinrichtung, welche die landwirtschaftliche Spritzeinrichtung dazu veranlasst, entlang der Reihenbereiche 22a-22k und entlang der Zwischenbereiche 24a-24j unterschiedliche Ausbringmengen an Flüssigkeit und unterschiedliche Flüssigkeiten auszubringen. Somit wird in den Reihenbereichen 22a-22k eine erste Menge von Flüssigkeit ausgebracht, wobei in den Zwischenbereichen 24a-24j eine zweite Menge von Flüssigkeit ausgebracht wird. Ferner wird in den Reihenbereichen 22a-22k eine erste Flüssigkeit ausgebracht, wobei in den Zwischenbereichen 24a-24j eine zweite Flüssigkeit ausgebracht wird. Die erste Flüssigkeit und die zweite Flüssigkeit unterscheiden sich hinsichtlich ihrer Zusammensetzung und hinsichtlich ihrer Wirkstoffe. Die erste Flüssigkeit, welche entlang der Reihenbereiche 22a-22k ausgebracht wird, umfasst Pflanzenschutzmittel, damit die Nutzpflanzen der Pflanzenreihen 20a-20k vor Schadorganismen geschützt werden. Das Pflanzenschutzmittel kann beispielsweise ein Insektizid sein. Die zweite Flüssigkeit, welche entlang der Zwischenbereiche 24a-24j ausgebracht wird, kann beispielsweise ein Herbizid umfassen, sodass eine effektive Unkrautbekämpfung bzw. Wildpflanzenbekämpfung in den Zwischenbereichen 24a-24j umgesetzt wird.

Da sich die Ausbringung von Flüssigkeit entlang der Reihenbereiche 22a-22k von der Ausbringung von Flüssigkeit entlang der Zwischenbereiche 24a-24j hinsichtlich der Ausbringmenge an Flüssigkeit unterscheidet, kommt es auch zur Ausbringung unterschiedlicher Wirkstoffmengen entlang der Reihenbereiche 22a-22k und entlang der Zwischenbereiche 24a-24j.

Die Ausbringung der ersten Flüssigkeit entlang der Reihenbereiche 22a-22k und die Ausbringung der zweiten Flüssigkeit entlang der Zwischenbereiche 24a-24j kann während des Ausbringvorgangs verändert werden. Beispielsweise kann die Erfassungseinrichtung 16 nicht nur zur Erfassung von Pflanzenreihen 20a-20k, sondern ebenso zur Erfassung von lokalem Schadbewuchs und/oder zur Erfassung von lokalen Wildpflanzen geeignet sein. In diesem Fall kann die Flüssigkeitsausbringung gezielt an den erfassten Schadbewuchs bzw. die erfassten Wildpflanzen angepasst werden. Beispielsweise kann lokal eine erhöhte Menge an Pflanzenschutzmittel oder eine erhöhte Menge an Herbiziden abgegeben werden.

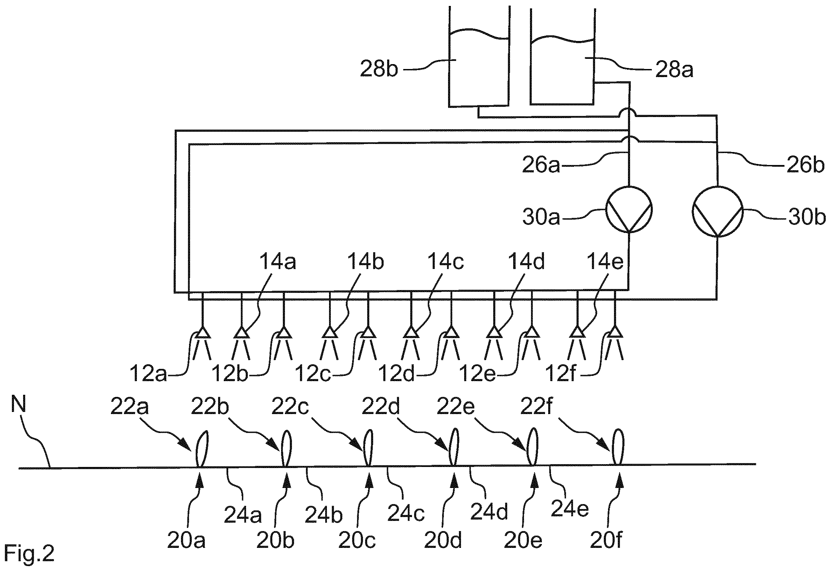

Die Fig. 2 zeigt zwei Flüssigkeitskreisläufe 26a, 26b einer landwirtschaftlichen Spritzeinrichtung. Über den ersten Flüssigkeitskreislauf 26a wird den als Spritzdüsen ausgebildeten Ausbringelementen 12a-12f eine erste Flüssigkeit zur Ausbringung bereitgestellt, welche in dem Vorratsbehälter 28a bevorratet ist. Innerhalb des ersten Flüssigkeitskreislaufs 26a ist eine Pumpe 30a angeordnet, mittels welcher eine Zirkulation der ersten Flüssigkeit innerhalb des ersten Flüssigkeitskreislaufs 26a erzeugt wird. Über den zweiten Flüssigkeitskreislauf 26b wird den als Spritzdüsen ausgebildeten Ausbringelementen 14a-14e eine zweite Flüssigkeit zur Ausbringung bereitgestellt, welche in dem Vorratsbehälter 28b bevorratet ist. Innerhalb des zweiten Flüssigkeitskreislaufs 26b ist eine Pumpe 30b angeordnet, mittels welcher eine Zirkulation der zweiten Flüssigkeit innerhalb des zweiten Flüssigkeitskreislaufs 26b erzeugt wird.

Mittels der Ausbringelemente 12a-12f wird die erste Flüssigkeit entlang von Reihenbereichen 22a-22f ausgebracht, wobei die Reihenbereiche 22a-22f die in Fahrtrichtung verlaufenden Pflanzenreihen 20a-20f umfassen. Über die Ausbringelemente 14a-14e wird die zweite Flüssigkeit entlang von Zwischenbereichen 24a-24e ausgebracht, wobei die Zwischenbereiche 24a-24e jeweils zwischen benachbarten Pflanzenreihen 20a-20f parallel zur Fahrtrichtung verlaufen.

Alternativ zu der Bevorratung der auszubringenden Flüssigkeit in Vorratsbehältern 28a, 28b können die erste Flüssigkeit und/oder die zweite Flüssigkeit auch über eine Wirkstoff-Direkteinspeisung erzeugt werden. Ferner können alternativ zu den dargestellten Flachstrahldüsen auch Dropleg-Düsen eingesetzt werden, deren Düsenöffnung im Nahbereich des Bodens angeordnet ist, sodass die Düsenöffnung sich unterhalb des Blätterdachs der Nutzpflanzen während der Ausbringung der Flüssigkeiten befindet. Ferner können die Ausbringelemente 12a-12f oder die Ausbringelemente 14a-14e auch als Schleppschläuche ausgebildet sein, mittels welchen dann insbesondere Flüssigdünger auf die landwirtschaftliche Nutzfläche N ausgebracht werden kann.

Die Ausbringelemente 12a-12f und/oder die Ausbringelemente 14a-14e können dabei derart an dem Spritzgestänge 10 der landwirtschaftlichen Spritzeinrichtung befestigt sein, dass die Position und die Neigung der Ausbringelemente 12a-12f, 14a-14e in Bezug auf das Spritzgestänge 10 während des Ausbringens der Flüssigkeiten veränderbar ist. Hierfür sind die Ausbringelemente 12a-12f, 14a-14e unabhängig voneinander aktiv ansteuerbar, sodass eine Bewegung der Ausbringelemente 12a-12f, 14a-14e quer zur Fahrtrichtung realisierbar ist. Das Bewegen der Ausbringelemente 12a-12f, 14a-14e erfolgt dabei über elektrische, pneumatische oder hydraulische Aktoren.

### Bezugszeichen

- 10: Spritzgestänge
- 12a-12k: Ausbringelemente
- 14a-14j: Ausbringelemente
- 16: Erfassungseinrichtung
- 18a-18h: Kameras
- 20a-20k: Pflanzenreihen
- 22a-22k: Reihenbereiche
- 24a-24j: Zwischenbereiche
- 26a, 26b: Flüssigkeitskreisläufe
- 28a, 28b: Vorratsbehälter
- 30a, 30b: Pumpen

- N: landwirtschaftliche Nutzfläche

## Patentansprüche

1. Verfahren zum Ausbringen von Flüssigkeit mittels einer landwirtschaftlichen Spritzeinrichtung, insbesondere einer Feldspritze, mit den Schritten:
- Erfassen von Pflanzenreihen auf einer landwirtschaftlichen Nutzfläche (N); und
- Ausbringen von Flüssigkeit auf die landwirtschaftliche Nutzfläche (N) mittels mehrerer Ausbringelemente (12a-12k, 14a-14j), welche entlang eines Spritzgestänges (10) der landwirtschaftlichen Spritzeinrichtung quer zur Fahrtrichtung angeordnet sind;
wobei sich die Ausbringung von Flüssigkeit entlang von Reihenbereichen (22a-22k), welche in Fahrtrichtung verlaufende Pflanzenreihen (20a-20k) aufweisen, von der Ausbringung von Flüssigkeit entlang von Zwischenbereichen (24a-24j), welche sich zwischen zwei in Fahrtrichtung verlaufenden Pflanzenreihen (20a-20k) befinden, unterschiedet, wobei entlang der Reihenbereiche (22a-22k) eine erste Flüssigkeit und entlang der Zwischenbereiche (24a-24j) eine zweite Flüssigkeit ausgebracht wird, **dadurch gekennzeichnet, dass** die erste Flüssigkeit mehreren oder sämtlichen Ausbringelementen (12a-12f) über einen eigenen Flüssigkeitskreislauf (26a) zugeführt wird und/oder durch eine Wirkstoff-Direkteinspeisung erzeugt wird.

2. Verfahren nach Anspruch 1,
**dadurch gekennzeichnet, dass** sich die Ausbringung von Flüssigkeit entlang der Reihenbereiche (22a-22k) von der Ausbringung von Flüssigkeit entlang der Zwischenbereiche (24a-24j) hinsichtlich der Ausbringmenge an Flüssigkeit unterscheidet.

3. Verfahren nach Anspruch 1 oder 2,
**dadurch gekennzeichnet, dass** sich die Ausbringung von Flüssigkeit entlang der Reihenbereiche (22a-22k) von der Ausbringung von Flüssigkeit entlang der Zwischenbereiche (24a-24j) hinsichtlich der Ausbringmethode unterscheidet.

4. Verfahren nach Anspruch 3,
**dadurch gekennzeichnet, dass** die Flüssigkeit entlang der Reihenbereiche (22a-22k) mittels eines ersten Typs von Ausbringelementen (12a-12k) und die Flüssigkeit entlang der Zwischenbereiche (24a-24j) mittels eines zweiten Typs von Ausbringelementen (14a-14j) ausgebracht wird.

5. Verfahren nach Anspruch 1,
**dadurch gekennzeichnet, dass** die erste Flüssigkeit Pflanzenschutzmittel und/oder Wachstumsregulatoren umfasst und/oder die zweite Flüssigkeit zumindest ein Herbizid umfasst.

6. Verfahren nach einem der vorstehenden Ansprüche,
**dadurch gekennzeichnet, dass** die zweite Flüssigkeit mehreren oder sämtlichen Ausbringelementen (14a-14e) über einen eigenen Flüssigkeitskreislauf (26b) zugeführt wird und/oder durch eine Wirkstoff-Direkteinspeisung erzeugt wird.

7. Verfahren nach einem der vorstehenden Ansprüche,
**dadurch gekennzeichnet**, die Ausbringung von Flüssigkeit entlang der Reihenbereiche (22a-22k) und/oder die Ausbringung von Flüssigkeit entlang der Zwischenbereiche (24a-24j) während des Ausbringvorgangs verändert wird.

8. Verfahren nach einem der vorstehenden Ansprüche,
**dadurch gekennzeichnet, dass** die Position und/oder die Neigung von einzelnen oder sämtlichen Ausbringelementen (12a-12k, 14a-14j) in Bezug auf das Spritzgestänge (10) während des Ausbringens der Flüssigkeit verändert wird.

9. Verfahren nach einem der vorstehenden Ansprüche,
**dadurch gekennzeichnet, dass** das Erfassen von Pflanzenreihen (20a-20k) auf der landwirtschaftlichen Nutzfläche (N) mittels eines oder mehrerer Sensoren und/oder mittels einer oder mehrerer Kameras (18a-18h) der landwirtschaftlichen Spritzeinrichtung erfolgt.

10. Landwirtschaftliche Spritzeinrichtung, insbesondere Feldspritze, mit
- einer Erfassungseinrichtung (16)
- mehreren Ausbringelementen (12a-12k, 14a-14j), welche entlang eines Spritzgestänges (10) quer zur Fahrtrichtung; und
- eine Steuerungseinrichtung;
**dadurch gekennzeichnet, dass** die Spritzeinrichtung dazu eingerichtet ist, das Verfahren zum Ausbringen von Flüssigkeit nach einem der Ansprüche 1 bis 9 auszuführen.

11. Landwirtschaftliche Spritzeinrichtung nach Anspruch 10, **gekennzeichnet dadurch, dass** die landwirtschaftliche Spritzeinrichtung mittels der Steuerungseinrichtung dazu eingerichtet ist, das Verfahren nach Anspruch 1 und/oder 2 auszuführen.

12. Landwirtschaftliche Spritzeinrichtung nach Anspruch 10 oder 11, **gekennzeichnet durch** Ausbringelemente (12a-12k) eines ersten Typs und Ausbringelemente (14a-14j) eines zweiten Typs, wobei die Ausbringelemente (12a-12k, 14a-14j) derart angeordnet und/oder ausgerichtet sind, dass Flüssigkeit entlang der Reihenbereiche (22a-22k) mittels der Ausbringelemente (12a-12k) des erstens Typs und die Flüssigkeit entlang der Zwischenbereiche (24a-24j) mittels der Ausbringelemente (14a-14j) des zweiten Typs ausbringbar sind.

## Claims

1. Method for applying liquid by means of an agricultural sprayer, in particular a field sprayer, comprising the steps of:
- detecting rows of plants on an agricultural land (N); and
- applying liquid onto the agricultural land (N) by means of a plurality of application elements (12a-12k, 14a-14j), which are arranged along a spray boom (10) of the agricultural sprayer transversely to the direction of travel;
wherein the application of liquid along row regions (22a-22k) which have rows of plants (20a-20k) running in the direction of travel differs from the application of liquid along intermediate regions (24a-24j) which are located between two rows of plants (20a-20k) running in the direction of travel, wherein a first liquid is applied along the row regions (22a-22k) and a second liquid is applied along the intermediate regions (24a-24j),
**characterized in that** the first liquid is supplied to a plurality of or all application elements (12a-12f) via a separate liquid circuit (26a) and/or is produced by means of an active-ingredient direct feed.

2. Method according to claim 1,
**characterized in that** the application of liquid along the row regions (22a-22k) differs from the application of liquid along the intermediate regions (24a-24j) with respect to the application amount of liquid.

3. Method according to claim 1 or 2,
**characterized in that** the application of liquid along the row regions (22a-22k) differs from the application of liquid along the intermediate regions (24a-24j) with respect to the application method.

4. Method according to claim 3,
**characterized in that** the liquid is applied along the row regions (22a-22k) by means of a first type of application elements (12a-12k) and the liquid is applied along the intermediate regions (24a-24j) by means of a second type of application elements (14a-14j).

5. Method according to claim 1,
**characterized in that** the first liquid comprises a plant protectant and/or growth regulators and/or the second liquid comprises at least one herbicide.

6. Method according to any of the preceding claims,
**characterized in that** the second liquid is supplied to a plurality of or all application elements (14a-14e) via a separate liquid circuit (26b) and/or is produced by means of an active-ingredient direct feed.

7. Method according to any of the preceding claims,
**characterized in that** the application of liquid along the row regions (22a-22k) and/or the application of liquid along the intermediate regions (24a-24j) is modified during the application process.

8. Method according to any of the preceding claims,
**characterized in that** the position and/or the inclination of individual or all application elements (12a-12k, 14a-14j) in relation to the spray boom (10) is modified during the application of the liquid.

9. Method according to any of the preceding claims,
**characterized in that** rows of plants (20a-20k) on the agricultural land (N) are detected by means of one or more sensors and/or by means of one or more cameras (18a-18h) of the agricultural sprayer.

10. Agricultural sprayer, in particular a field sprayer, comprising
- a detection device (16)
- a plurality of application elements (12a-12k, 14a-14j) which along a spray boom (10) transversely to the direction of travel; and
- a control device;
**characterized in that** the sprayer is designed to carry out the method for applying liquid according to any of claims 1 to 9.

11. Agricultural sprayer according to claim 10,
**characterized in that** the agricultural sprayer is designed to carry out the method according to claim 1 and/or claim 2 by means of the control device.

12. Agricultural sprayer according to claim 10 or 11,
**characterized by** application elements (12a-12k) of a first type and application elements (14a-14j) of a second type, wherein the application elements (12a-12k, 14a-14j) are arranged and/or oriented in such a way that liquid can be applied along the row regions (22a-22k) by means of the application elements (12a-12k) of the first type and the liquid can be applied along the intermediate regions (24a-24j) by means of the application elements (14a-14j) of the second type.

## Revendications

1. Procédé pour l'épandage de liquide à l'aide d'un dispositif de pulvérisation agricole, en particulier d'un pulvérisateur agricole, comportant les étapes consistant à :
- détecter des rangées de plantes sur une surface utile agricole (N) ; et
- épandre du liquide sur la surface utile agricole (N) à l'aide de plusieurs éléments d'épandage (12a-12k, 14a-14j) qui sont agencés le long d'une rampe de pulvérisation (10) du dispositif de pulvérisation agricole, transversalement à la direction de déplacement ;
dans lequel l'épandage de liquide le long de zones de rangées (22a-22k), lesquelles présentent des rangées de plantes (20a-20k) s'étendant dans la direction de déplacement, est différent de l'épandage de liquide le long de zones intermédiaires (24a-24j), lesquelles se trouvent entre deux rangées de plantes (20a-20k) s'étendant dans la direction de déplacement, dans lequel un premier liquide est épandu le long des zones de rangées (22a-22k) et un second liquide est épandu le long des zones intermédiaires (24a-24j),
**caractérisé en ce que** le premier liquide est fourni à plusieurs ou à l'ensemble des éléments d'épandage (12a-12f) par l'intermédiaire d'un circuit de liquide (26a) lui étant propre et/ou est généré par une injection directe de substance active.

2. Procédé selon la revendication 1,
**caractérisé en ce que** l'épandage de liquide le long des zones de rangées (22a-22k) est différent de l'épandage de liquide le long des zones intermédiaires (24a-24j) en termes de quantité d'épandage de liquide.

3. Procédé selon la revendication 1 ou 2,
**caractérisé en ce que** l'épandage de liquide le long des zones de rangées (22a-22k) est différent de l'épandage de liquide le long des zones intermédiaires (24a-24j) en termes de méthode d'épandage.

4. Procédé selon la revendication 3,
**caractérisé en ce que** le liquide est épandu le long des zones de rangées (22a-22k) à l'aide d'un premier type d'éléments d'épandage (12a-12k) et le liquide est épandu le long des zones intermédiaires (24a-24j) à l'aide d'un second type d'éléments d'épandage (14a-14j).

5. Procédé selon la revendication 1,
**caractérisé en ce que** le premier liquide comprend des agents phytosanitaires et/ou des régulateurs de croissance et/ou le second liquide comprend au moins un herbicide.

6. Procédé selon l'une des revendications précédentes,
**caractérisé en ce que** le second liquide est fourni à plusieurs ou à l'ensemble des éléments d'épandage (14a-14e) par l'intermédiaire d'un circuit de liquide (26b) lui étant propre et/ou est généré par une injection directe de substance active.

7. Procédé selon l'une des revendications précédentes,
**caractérisé en ce que** l'épandage de liquide le long des zones de rangées (22a-22k) et/ou l'épandage de liquide le long des zones intermédiaires (24a-24j) sont modifiés pendant le processus d'épandage.

8. Procédé selon l'une des revendications précédentes,
**caractérisé en ce que** la position et/ou l'inclinaison de quelques ou de tous les éléments d'épandage (12a-12k, 14a-14j) sont modifiées par rapport à la rampe de pulvérisation (10) pendant l'épandage du liquide.

9. Procédé selon l'une des revendications précédentes,
**caractérisé en ce que** la détection de rangées de plantes (20a-20k) sur la surface utile agricole (N) est effectuée à l'aide d'un ou de plusieurs capteurs et/ou à l'aide d'une ou de plusieurs caméras (18a-18h) du dispositif de pulvérisation agricole.

10. Dispositif de pulvérisation agricole, en particulier pulvérisateur agricole, comportant
- un dispositif de détection (16)
- plusieurs éléments d'épandage (12a-12k, 14a-14j) le long d'une rampe de pulvérisation (10), transversalement à la direction de déplacement ; et
- un dispositif de commande ;
**caractérisé en ce que** le dispositif de pulvérisation est configuré pour exécuter le procédé pour l'épandage de liquide selon l'une des revendications 1 à 9.

11. Dispositif de pulvérisation agricole selon la revendication 10, **caractérisé en ce que** le dispositif de pulvérisation agricole est configuré pour exécuter, à l'aide du dispositif de commande, le procédé selon la revendication 1 et/ou 2.

12. Dispositif de pulvérisation agricole selon la revendication 10 ou 11, **caractérisé par** des éléments d'épandage (12a-12k) d'un premier type et des éléments d'épandage (14a-14j) d'un second type, dans lequel les éléments d'épandage (12a-12k, 14a-14j) sont agencés et/ou orientés de telle sorte que du liquide peut être épandu le long des zones de rangées (22a-22k) à l'aide des éléments d'épandage (12a-12k) du premier type et du liquide peut être épandu le long des zones intermédiaires (24a-24j) à l'aide des éléments d'épandage (14a-14j) du second type.
